# EUROPÄISCHE PATENTSCHRIFT

(11) **EP 2 945 215 B1**
(45) Veröffentlichungstag und Bekanntmachung des Hinweises auf die Patenterteilung: **16.08.2017**
(21) Anmeldenummer: 15166730.0
(22) Anmeldetag: 07.05.2015
(51) Int. Cl.: H01M 10/42

(54) **TRAKTIONSBATTERIE**
TRACTION BATTERY
BATTERIE DE PROPULSION

(30) Priorität: 14.05.2014 DE 102014106795
(43) Veröffentlichungstag der Anmeldung: 18.11.2015
(73) Patentinhaber: STILL GmbH, 22113 Hamburg (DE)
(72) Erfinder: Tödter, Joachim, 22391 Hamburg (DE)
(74) Vertreter: Patentship Patentanwaltsgesellschaft mbH

(56) Entgegenhaltungen:
- EP-A1- 1 732 027
- EP-A2- 2 033 933
- WO-A1-2008/089454
- WO-A1-2014/029538
- US-A1- 2010 052 614
- US-A1- 2013 138 857

## Beschreibung

Die Erfindung betrifft ein System nach dem Oberbegriff des Patentanspruchs 1.

Für den Betrieb von batterie-elektrisch angetriebenen Flurförderzeugen, wie etwa beispielsweise Gabelstaplern, sind als austauschbare Traktionsbatterien im Wechselbetrieb noch Blei-Säurebatterien üblich, bei denen eine chemische Reaktion zwischen Schwefelsäure und Blei zur Speicherung der elektrischen Energie dient.

Bereits bei solchen Blei-Säurebatterien war es bekannt, einen Batteriecontroller vorzusehen, der mit dem Flurförderzeug verbunden ist, um Hinweise auf erforderliche Wartungsarbeiten und den Zustand der Batterie im Flurförderzeug anzeigen zu können. Da jedoch hierdurch Zusatzkosten verursacht werden und eine Verbindung bei jedem Batteriewechsel immer gesteckt werden muss, wodurch Arbeitsaufwand sowie die Gefahr von Beschädigungen entsteht, hat sich dies nicht durchgesetzt. Auch eine Funkverbindung für die Datenübertragung, hat sich aufgrund der relativ hohen Kosten im Verhältnis zu dem Nutzen nicht durchgesetzt.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen, dass sie gegenüber einer Blei Säurebatterie eine höhere Energiedichte in Bezug auf Gewicht und/oder Volumen aufweisen und eine andere Technik als eine Blei-Säure-Reaktion für die Energiespeicherung nutzen. Hinzu kommt bei vielen Hochleistungsbatterien als Merkmal, dass eine große Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei der Lithium-Ionenbatterie sind ebenfalls unterschiedliche Technologien bekannt, wie beispielsweise Lithium-Polymer, Lithium-Kobaltdioxid, Lithium-Luft, Lithium-Titanat, Lithium-Eisenphosphat, Lithium-Mangan und Zinn-Schwefel-Lithiumionen.

Besonders vorteilhaft ist der Einsatz solcher Hochleistungsbatterien bei Fahrzeugen und beispielsweise Flurförderzeugen, da aufgrund der hohen Energiedichte in Bezug auf das Volumen bei dem vorgegebenen Bauraum für die Batterie eine größere Menge elektrische Energie gespeichert werden kann und somit die Reichweite eines Fahrzeugs bzw. die Einsatzdauer des Flurförderzeugs vergrößert werden kann.

Bei solchen Hochleistungsbatterien sind zusätzliche Sicherheitsmaßnahmen und Maßnahmen zur Regelung im Betrieb erforderlich. Es werden daher Überwachungs- und Steuerungsvorrichtungen vorgesehen, die unter dem Begriff Batteriemanagementsystem zusammengefasst werden. Dieses Batteriemanagementsystem überwacht den Zustand einzelner Batteriezellen bzw. Module, die aus einer oder mehreren Batteriezellen bestehen. Dabei werden sicherheitsrelevante Zustände, wie Ströme und Spannungen überwacht sowie gegebenenfalls ein Hauptschütz der Hochleistungsbatterie gesteuert. Neben weiteren wichtigen oder möglichen Funktionen ermittelt das Batteriemanagementsystem den Ladezustand der gesamten Hochleistungsbatterie wie auch einzelner Module oder Batteriezellen. Eine übliche Funktion des Batteriemanagementsystems ist auch die Erfassung von Fehlern sowie deren Speicherung und die Durchführung einer Diagnose, so dass Bauteile gezielt bei einem Ausfall ausgetauscht werden können. Auch wird von einem Batteriemanagementsystem oftmals die Restlebensdauer von Batteriezellen bestimmt. Schließlich sorgt das Batteriemanagementsystem für eine gleichmäßige Belastung der Batteriezellen verhindert eine unbeabsichtigte thermische Belastung oder Tiefentladung einer einzelnen Batteriezelle.

Aus Sicherheitsgründen, aber auch zur Optimierung des Betriebs der Hochleistungsbatterie, wie auch des Flurförderzeugs, ist es wünschenswert, einen Teil oder alle der zuvor genannten Daten mit dem Flurförderzeug und/oder einem Ladegerät auszutauschen und von diesen Daten zu erhalten. Denkbar ist es etwa, von einem Flurförderzeug die benötigte Leistung zu übertragen und mit einem Ladegerät die Temperatur der Hochleistungsbatterie auszutauschen, um ein daran angepasstes Ladeverfahren durchzuführen.

Grundsätzlich ist es möglich, für die Übertragung dieser Daten in beiden Richtungen ein CAN-Bussystem einzusetzen, wie es im Bereich des Fahrzeugbaus üblich ist.

Nachteilig hieran ist jedoch, dass im Bereich der Ladegeräte ein CAN-Bussystem sehr unüblich ist und eher Systeme genutzt werden, die aus dem Bereich der stationären Hausinstallation kommen. Weiterhin ist nachteilig, dass ein Batteriemanagementsystem insgesamt eine komplexe Software darstellen kann mit einem beträchtlichen Umfang. Wenn aufgrund von Fehlern, Ergänzungen und Programmerweiterungen ein Update des Programms eines Batteriemanagementsystems erforderlich ist, muss ein erheblicher Umfang an Daten über diesen Bus als Download übertragen werden. Da dies im Rahmen der Wartung erfolgt und ein Betrieb des Fahrzeugs gleichzeitig nicht möglich ist, ist die niedrige Datenübertragungsrate eines CAN-Bussystems hier sehr nachteilig. Schließlich muss das eingesetzte Kabelsystem einschließlich des verwendeten Bussystems bzw. Protokolls robust in der Umgebung eines Fahrzeugs arbeiten, d.h. Toleranz gegenüber Vibrationen, Feuchtigkeit, Staub, Temperatur und elektromagnetischer Einstrahlung aufweisen. Es sollte bei hoher Übertragungssicherheit eine Datenübertragung in Echtzeit möglich sein.

Aus der US 2013/138857 A1 ist eine Traktionsbatterie für ein Elektrofahrzeug mit einem komplexen Batteriemanagementsystem bekannt, das mit einer Sammel-Steuereinheit über eine Ethernetverbindung verbunden ist.

Die US 2010/052614 A1, offenbart ein Batteriemanagementsystem für eine Lithium-Ionenbatterie, das eine Ethernet-Schnittstelle aufweist um, eine Verbindung zu einem Computer herzustellen, beispielsweise zum Auslesen von Datenlogs.

Die WO 2014/029538 A1, offenbart für ein Elektrofahrzeug eine Lithium-Ionenbatterie mit einem Batteriemanagementsystem sowie einer Ethernetverbindung für eine interne Verbindung von Batteriezellen durch ein Bussystem.

Die WO 2008/089454 A1, offenbart ein Verfahren zum Betrieb einer Lithium-Ionenbatterie, die für Vorrichtungen, wie beispielsweise tragbare Computer und Smartphones, vorgesehen ist und deren Batteriemanagementsystem eine Ethernetverbindung aufweisen kann.

Der vorliegenden Erfindung liegt die Aufgabe zugrunde, ein System aus einer Hochleistungsbatterie, einem Flurförderzeug sowie einem Ladegerät jeweils mit einer Datenübertragung zur Verfügung zu stellen, das die oben genannten Nachteile vermeidet, und mit dem bei hoher Übertragungssicherheit und Übertragungsrate eine Datenkommunikation möglich ist.

Diese Aufgabe wird durch ein System mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß durch ein System nach Anspruch 1 gelöst, indem das Batteriemanagementsystem einen Anschluss für eine Ethernetverbindung aufweist, über die Daten mit einem dem Flurförderzeug und/oder Ladegerät ausgetauscht werden können, das Ladegerät einen Anschluss für eine Ethernetverbindung aufweist, über die Daten mit der Traktionsbatterie austauschbar sind und das Flurförderzeug einen Anschluss für eine Ethernetverbindung aufweist, Vorteilhaft ist über die Ethernetverbindung eine Datenkommunikation des Batteriemanagementsystems mit einem Flurförderzeug und/oder einem Ladegerät bei hoher Übertragungssicherheit und Übertragungsrate möglich. Dabei ist unter dem Begriff "Ethernet" jegliche Art von Ethernet zu verstehen, wie zum Beispiel auch ein embedded Ethernet. Es können große Datenmengen schnell übertragen werden und Software-Updates einfach erfolgen. Es können während des Betriebs der Traktionsbatterie aufgezeichnete Daten für eine externe Auswertung auch in größerem Umfang übertragen werden, um beispielsweise den Zustand und einen eventuellen Restwert der Traktionsbatterie beurteilen zu können. Die Datenübertragung ist robust gegenüber Störungen aufgrund der Fehlerkorrekturen und Kontrollen des Ethernetprotokolls, beispielsweise indem eine redundante oder erneute Datenpaketübermittlung erfolgt. Durch die Ethernetverbindung werden Protokolle zur Verfügung gestellt, die eine Echtzeitfähigkeit von verbundenen Rechnersystemen ermöglichen. Vorteilhaft sind Ethernetnetze in Gebäuden und die Gewerbeanlagen bereits weit verbreitet und es wird somit eine einfache und durchgängige Anbindung der Traktionsbatterie an übergeordnete Systeme im Bedarfsfall ohne Systembruch oder Systemschnittstelle mit einem identischen Protokoll möglich. Zur Steuerung der Belastung des Stromnetzes kann es sinnvoll sein, die Ladung der Traktionsbatterie zu bestimmten Zeiten vorzunehmen. Diese Zeitsteuerung kann durch das Ladegerät erfolgen. Vorteilhaft wird es jedoch durch die Ethernetverbindung möglich, dass die Traktionsbatterie die Steuerung durchführt. Dies ist besonders günstig bei fahrzeugintegrierten Ladegeräten, die selbst keine Verbindung zu Datennetzen wie etwa dem Internet haben.

Vorteilhaft weist der Anschluss der Traktionsbatterie eine wasserdichte Steckverbindung auf.

Durch wasserdichte Stecker sowie Kupplungen und robustere Kabel stehen Ausführungen als Hardware-Verbindungstechnik zur Verfügung, die sich besonders für die Verwendung in Fahrzeugen eignet. Diese sind gut geschützt gegen mechanische, thermische und elektromagnetische Beeinflussung. Ebenfalls möglich ist eine faseroptische Datenübertragung.

Ein Controller der Traktionsbatterie kann eine MAC-Adresse zur Verfügung stellen.

Durch den Controller, der auch Teil des Batteriemanagementsystems sein kann und mit diesem identische Bauelemente aufweisen kann, kann eine eindeutige MAC-Adresse zugeordnet werden. Durch diese MAC-Adresse kann der Controller weltweit eindeutig identifiziert werden. Es ist auch denkbar, einen solchen Controller mit einer MAC-Adresse bei einem Ladegerät mit einem Ethernetanschluss sowie alternativ oder daneben auch bei einem Flurförderzeug mit einem Ethernetanschluss einzusetzen.

Durch den Ethernetstandard ist es möglich, direkt ein Notebook bzw. einen beliebigen Computer zur Diagnose der Traktionsbatterie und zum Datenaustausch anzuschließen. Weiterhin kann über das Internet direkt und ohne Systemschranke auch eine Ferndiagnose und Beurteilung der Traktionsbatterie erfolgen.

Es kann ein Controller der Traktionsbatterie für WLAN und/oder Bluetooth vorgesehen sein.

Dadurch wird eine drahtlose Verbindung zwischen Traktionsbatterie und einem Notebook, einem PC einem Tableau-Computer oder Mobilfunktelefon möglich. Insbesondere Flürförderzeuge sind bereits teilweise mit einer Funkdatenübertragung wie WLAN, GSM, GPRS, LTE, UMTS und Bluetooth ausgestattet. Eine Ethernetverbindung zwischen Traktionsbatterie und Flurförderzeug eröffnet daher die Möglichkeit, Daten zu und von dem Flurförderzeug ohne zusätzlichen Aufwand zu übertragen

Vorteilhaft stellt das Batteriemanagementsystem der Traktionsbatterie herunterladbar eine Diagnosesoftware zur Verfügung.

Vorteilhaft muss eine Servicekraft die Diagnosesoftware nicht selbst mit sich führen. Vielmehr kann diese auf jedes der zuvor bereits beschriebenen Geräte über die Ethernetverbindung geladen werden und auf diesen ausgeführt werden.

Ein Batterieschütz kann durch einen Datenbefehl über den Ethernetanschluss schaltbar sein.

Vorteilhaft ist die Hochleistungsbatterie eine Lithium-Ionenbatterie.

Es kann das Ladegerät in das Flurförderzeug integriert sein und eine Verbindung mit der Traktionsbatterie indirekt über das Flurförderzeug erfolgen.

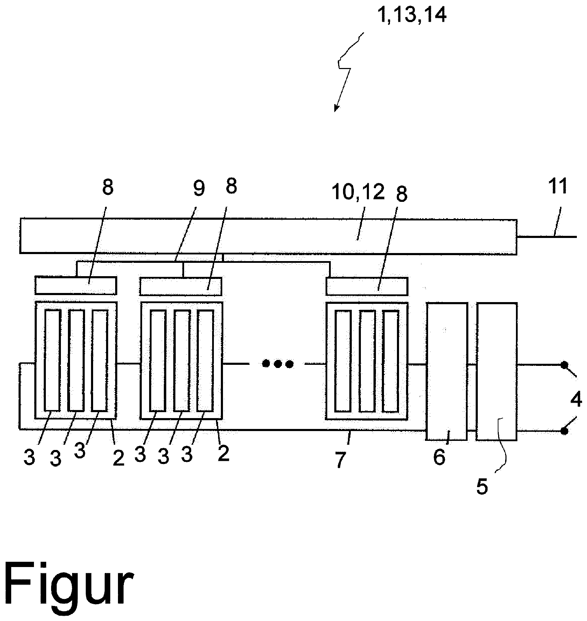

Weitere Vorteile und Einzelheiten der Erfindung werden anhand des in der schematischen Figur dargestellten Ausführungsbeispiels näher erläutert. Die Figur zeigt schematisch den Aufbau einer Traktionsbatterie 1, die Batteriemodule 2 mit Batteriezellen 3 aufweist. Ein Leistungsanschluss 4 ist über einen Schütz 5 und Überwachungssensoren 6 mit einem internen Hauptstromkreis 7 verbunden, der die Batteriemodule 2 anschließt. Jedes der Batteriemodule 2 weist ein Modul-Batteriemanagementsystem 8 auf, das über einen internen Informationsbus 9 mit einem Hauptbatteriemanagementsystem 10 verbunden ist. Das Hauptbatteriemanagementsystem 10 weist einen Ethernetbusausgang 11 auf und umfasst einen Controller 12 für den Ethernetbusausgang 11 auf, der eine MAC-Adresse zur Verfügung stellt. Die Traktionsbatterie 1 ist eine Hochleistungsbatterie 13, insbesondere eine Lithium-Ionenbatterie 14.

## Patentansprüche

1. System aus mindestens einer Traktionsbatterie für ein Flurförderzeug, die als Hochleistungsbatterie (13) ausgebildet ist und einen Batterietrog aufweist, innerhalb dessen Module (2) angeordnet sind, die jeweils aus mindestens einer Batteriezelle (3) aufgebaut sind, und mit einem Batteriemanagementsystem (8,10), das Überwachungs- und Steuerungsvorrichtungen umfasst, mindestens einem Ladegerät für die Traktionsbatterie sowie mindestens einem Flurförderzeug, das batterie-elektrisch betrieben wird und ein Batteriefach aufweist, in das die Traktionsbatterie (1) einsetzbar ist
**dadurch gekennzeichnet,**
**dass** das Batteriemanagementsystem (8,10) einen Anschluss für eine Ethernetverbindung (11) aufweist, über die Daten mit dem Flurförderzeug und/oder Ladegerät ausgetauscht werden können,
das Ladegerät einen Anschluss für eine Ethernetverbindung (11) aufweist, über die Daten mit der Traktionsbatterie (1) austauschbar sind und
das Flurförderzeug einen Anschluss für eine Ethernetverbindung (11) aufweist, über die Daten mit der Traktionsbatterie (1) austauschbar sind.

2. System nach Anspruch 1,
**dadurch gekennzeichnet,**
**dass** der Anschluss (11) der Traktionsbatterie eine wasserdichte Steckverbindung aufweist.

3. System nach Anspruch 1 oder 2,
**dadurch gekennzeichnet,**
**dass** ein Controller (12) der Traktionsbatterie eine MAC-Adresse zur Verfügung stellt.

4. System nach einem der Ansprüche 1 bis 3,
**dadurch gekennzeichnet,**
**dass** ein Controller (12) der Traktionsbatterie für WLAN und/oder Bluetooth vorgesehen ist.

5. System nach einem der Ansprüche 1 bis 4,
**dadurch gekennzeichnet,**
**dass** das Batteriemanagementsystem (8,10) der Traktionsbatterie herunterladbar eine Diagnosesoftware zur Verfügung stellt.

6. System nach einem der Ansprüche 1 bis 5,
**dadurch gekennzeichnet,**
**dass** ein Batterieschütz (5) der Traktionsbatterie durch einen Datenbefehl über den Anschluss (11) schaltbar ist.

7. System nach einem der Ansprüche 1 bis 6,
**dadurch gekennzeichnet,**
**dass** die Hochleistungsbatterie (13) eine Lithium-Ionenbatterie (14) ist.

8. System nach einem der Ansprüche 1 bis 7,
**dadurch gekennzeichnet,**
**dass** das Ladegerät in das Flurförderzeug integriert ist und eine Verbindung mit der Traktionsbatterie (1) indirekt über das Flurförderzeug erfolgen kann.

## Claims

1. System comprising at least one traction battery for an industrial truck, which battery is configured as a high-powered battery (13) and has a battery tray inside which modules (2) each constructed from at least one battery cell (3) are arranged, and having a battery management system (8, 10) comprising monitoring and control apparatuses, at least one charger for the traction battery and at least one industrial truck which is operated in a battery-electric manner and has a battery compartment into which the traction battery (1) can be inserted,
**characterized**
**in that** the battery management system (8, 10) has a terminal for an Ethernet connection (11) which can be used to interchange data with the industrial truck and/or charger,
the charger has a terminal for an Ethernet connection (11) which can be used to interchange data with the traction battery (1), and
the industrial truck has a terminal for an Ethernet connection (11) which can be used to interchange data with the traction battery (1).

2. System according to Claim 1,
**characterized**
**in that** the terminal (11) of the traction battery has a watertight plug connection.

3. System according to Claim 1 or 2,
**characterized**
**in that** a controller (12) of the traction battery provides a MAC address.

4. System according to one of Claims 1 to 3,
**characterized**
**in that** a controller (12) of the traction battery is provided for WLAN and/or Bluetooth.

5. System according to one of Claims 1 to 4,
**characterized**
**in that** the battery management system (8, 10) of the traction battery provides diagnostic software in a downloadable form.

6. System according to one of Claims 1 to 5,
**characterized**
**in that** a battery contactor (5) of the traction battery can be switched by means of a data command via the terminal (11).

7. System according to one of Claims 1 to 6,
**characterized**
**in that** the high-power battery (13) is a lithium ion battery (14).

8. System according to one of Claims 1 to 7,
**characterized**
**in that** the charger is integrated in the industrial truck and a connection to the traction battery (1) can be effected indirectly via the industrial truck.

## Revendications

1. Système constitué d'au moins une batterie de traction destinée à un chariot de manutention, réalisée sous la forme d'une batterie de forte puissance (13) et comportant un châssis de batterie, à l'intérieur duquel sont disposés des modules (2) qui sont respectivement réalisés à partir d'au moins un élément de batterie (3), et comportant un système de gestion de batterie (8, 10) comprenant un dispositif de surveillance et de commande, au moins un appareil de charge destiné à la batterie de traction ainsi qu'au moins un chariot de manutention fonctionnant électriquement sur batterie et comportant un logement de batterie dans lequel peut être introduite la batterie de traction (1), **caractérisé en ce que** le système de gestion de batterie (8, 10) comporte un connecteur destiné à une liaison Ethernet (11) par l'intermédiaire de laquelle des données peuvent être échangées avec le chariot de manutention et/ou l'appareil de charge,
l'appareil de charge comporte un connecteur destiné à une liaison Ethernet (11) par l'intermédiaire de laquelle des données peuvent être échangées avec la batterie de traction (1), et
le chariot de manutention comporte un connecteur destiné à une liaison Ethernet (11) par l'intermédiaire de laquelle des données peuvent être échangées avec la batterie de traction (1).

2. Système selon la revendication 1,
**caractérisé en ce que** le connecteur (11) de la batterie de traction comporte un raccord enfichable étanche à l'eau.

3. Système selon la revendication 1 ou 2,
**caractérisé en ce qu'**un contrôleur (12) de la batterie de traction met à disposition une adresse MAC.

4. Système selon l'une quelconque des revendications 1 à 3,
**caractérisé en ce qu'**il est prévu un contrôleur (12) de la batterie de traction destiné au WLAN et/ou au Bluetooth.

5. Système selon l'une quelconque des revendications 1 à 4,
**caractérisé en ce que** le système de gestion de batterie (8, 10) de la batterie de traction met à disposition un logiciel de diagnostic pouvant être téléchargé.

6. Système selon l'une quelconque des revendications 1 à 5,
**caractérisé en ce qu'**une protection de batterie (5) de la batterie de traction peut être activée par une instruction de données par l'intermédiaire du connecteur (11).

7. Système selon l'une quelconque des revendications 1 à 6,
**caractérisé en ce que** la batterie de forte puissance (13) est une batterie au lithium-ion (14).

8. Système selon l'une quelconque des revendications 1 à 7,
**caractérisé en ce que** l'appareil de charge est intégré au chariot de manutention et **en ce qu'**une connexion à la batterie de traction (1) peut être effectuée indirectement par l'intermédiaire du chariot de manutention.
